# EUROPEAN PATENT SPECIFICATION

(11) **EP 4 333 632 B1**
(45) Date of publication and mention of the grant of the patent: **18.06.2025**
(21) Application number: 22728119.3
(22) Date of filing: 05.05.2022
(51) Int. Cl.: A23B 2/95, A23C 1/05, A23C 9/16, A23G 1/56, A23L 2/39, A23P 10/47, B01D 1/14, B01D 1/18

(54) **CONTINUOUS BINDER LIQUID AGGLOMERATION SYSTEM**
SYSTEM ZUR KONTINUIERLICHEN BINDEMITTELFLÜSSIGKEITSAGGLOMERATION
SYSTÈME D'AGGLOMÉRATION CONTINUE DE LIQUIDE LIANT

(30) Priority: 07.05.2021 EP 21172885
(43) Date of publication of application: 13.03.2024
(73) Proprietor: Société des Produits Nestlé S.A., 1800 Vevey (CH)
(72) Inventor: CHAVEZ MONTES, Bruno Edgar, 1012 Lausanne (CH); FRITZ, Michael, 1470 Estavayer-Le-Lac (CH); MARTINS, Leandro, 1400 Yverdon-les-Bains (CH)
(74) Representative: Gagliardi, Tatiana
(86) International application number: PCT/EP2022/062184
(87) International publication number: WO 2022/234033

(56) References cited:
- EP-A1- 0 472 744
- EP-A1- 0 800 860
- EP-A1- 1 199 948
- EP-A1- 3 253 223

## Description

### Field of the invention

The present invention relates to an agglomeration system for continuously producing soluble agglomerated food powder comprising plant-based powder, in particular the invention relates to continuous binder liquid agglomeration comprising an air-drying system. The invention also relates to a method of using the agglomeration system for preparing agglomerated food powder.

### Background

Soluble food powders such as chocolate or malt powders are currently used for preparing beverages by mixing water or milk with these powders. However, the existing beverage dispenser devices which make use of the above outlined principle suffer the inconvenience that the beverage soluble powder is not always fully dissolved, particularly when a cold beverage is prepared by dissolving the powder with a cold diluent, either cold water or cold milk. Thus, residua of the undispersed or undissolved powder are present in the prepared beverage; this leads to a non-uniform and thus to a non-inviting appearance of the prepared beverage. Besides, since the whole dose of soluble powder is not totally dissolved, the final beverage does not present the expected taste; actually, there exists a fine tuning between the diluent volume and the powder quantity to get the best final beverage. If the dissolution is not efficient, the final beverage will not reach the expected taste. Undissolved material can also lead to a feeling of sandiness in the mouth and/or result in leftovers at the bottom of the cup when the drink is finished, with the consequent negative impression for the consumer.

Solutions have been proposed to add additives in the beverage soluble powders compositions to improve their dissolution, but these additives may have an impact on the taste of the beverages or increase the costs of production of the existing powders.

For example, WO 2007/088195 proposes to add flowing agents to food powders in order to improve their cold dissolution characteristics.

EP 740 904 describes a method to improve the wettability of agglomerated cocoa and sugar containing powders which consists in exposing the powders to electromagnetic radiation. Yet, improving the wettability is not sufficient to get a good dissolution of the powders at the moment of preparation of the beverages. In WO 2011/042356 it has been proposed to improve solubility in cold water by heating the powder just before its dissolution. But such a process can only be implemented in a beverage preparation machine specifically designed for this purpose.

It is also known that sugar boosts the dissolution of chocolate mixes. For example, WO 2012/095121 proposes coating a cocoa powder or a cocoa cake with a hydrophilic agent like sugar. Yet such a solution increases the ratio of sugar in the beverage powder. It can affect the original taste of the cocoa and it increases the rate of sugar taken by the consumer unnecessarily. EP 0 472 744 Al describes the agglomeration of a soluble, powder-form material, such as coffee substitutes and cocoa-based beverages, wherein the powder is wetted with steam.

Furthermore, certain consumers wish to consume less milk or do not want to consume milk at all, for example, because of its animal origin, due to lactose intolerance or due to dairy allergies. They may also see potential environmental sustainability issues.

As a consequence, consumers seek alternatives to milk. Alternatives to milk do exist with good nutrition and taste. However, the problem discussed above also applies to these kinds of beverages.

There is a need for a system or apparatus for making plant-based powder with a good solubility that can provide an alternative to milk based powders.

There is need for a system or apparatus for improving the solubility of soluble chocolate or malt beverage powders when they are dissolved with a cold diluent. It would be advantageous to shorten the dissolution time of soluble chocolate or malt beverage powders and the reconstitution time of the beverages.

It would be advantageous to improve the solubility of soluble chocolate or malt beverage powders without using additive components in important ratios.

It would be advantageous to improve solubility of soluble chocolate beverage powders while keeping good flowability for these powders, essentially to enable a consistent dosing of the powder when used in a beverage machine dispenser. Similar considerations apply to other plant-based powder such as plant-based protein powders.

### Object of the invention

The objective of the present invention is to improve the state of the art and in particular to provide a food powder that can be used e.g. as dairy alternative. The object of the invention is also to provide a food powder that contains cocoa, malt or other plant material a good flowability and dispersibility and which can be used in powder dispensers.

### Summary of the invention

The present invention provides the improvement by the subject matter of the independent claims. The dependent claims relate to preferred embodiments of the present

In a first aspect, the invention relates to an agglomeration system for continuously producing soluble agglomerated food powder comprising plant-based powder, said system comprises - an air-drying system, - a pre-wetting unit comprising a powder inlet and a powder outlet, and a continuous mixer, - a first steam nozzle for injecting steam into the continuous mixer, -a connection element connected the powder outlet to a inlet to a fluidization unit, - a fluidization unit comprising aninlet and the outlet, and a conveying means for receiving powder from the pre-wetting unit powder outlet via the connection element, - a second steam nozzle comprising a powder inlet for receiving the pre-wetted powder, a steam injection orifice arranged for spraying steam onto the pre-wetted powder at a powder outlet, and - a binder nozzle arranged below the second steam nozzle, and comprising a supply pipe adapted to spray liquid binder with compressed air into the powder at the powder outlet of the second steam nozzle, and injecting agglomerated powder from outlet into the an air-drying system.

In a second aspect, the invention relates to a method for continuously producing a soluble agglomerated food powder comprising plant-based powder, said method comprises the steps of -providing an agglomeration system according to claims 1 to 9 , -providing food powder, -pre-agglomerating the food powder by pre-wetting the food powder with steam in the continuous mixer, -providing a liquid binder, -feeding the pre-wetted powder via the second steam nozzle into the air-drying system while spraying the liquid binder via the binder liquid nozzle onto the pre-wetted powder and injecting steam via the second steam nozzle into the pre-wetted powder in at the same time to form agglomerates of the pre-wetted powder,

As used in this specification, the words "comprises", "comprising", and similar words, are not to be interpreted in an exclusive or exhaustive sense. In other words, they are intended to mean "including, but not limited to".

It has been found that the agglomeration system and the method according to the present invention achieve the objective of the present invention in particular that the agglomerated food powder shows good reconstitution properties in cold liquid.

### Brief Description of the Drawings

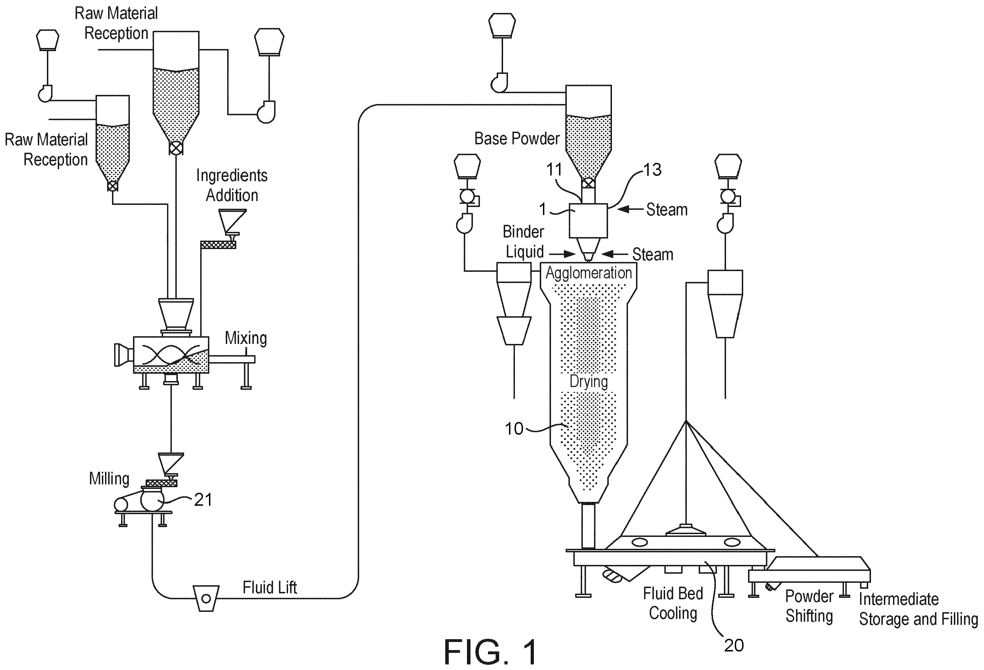

Figure 1 shows schematically the agglomeration system and method according to the invention for agglomerated food powders including optional process units: mixing, milling, drying, cooling and sieving. The agglomeration system according to the invention replaces the conventional steam agglomeration unit at the top of the drying and agglomeration tower.

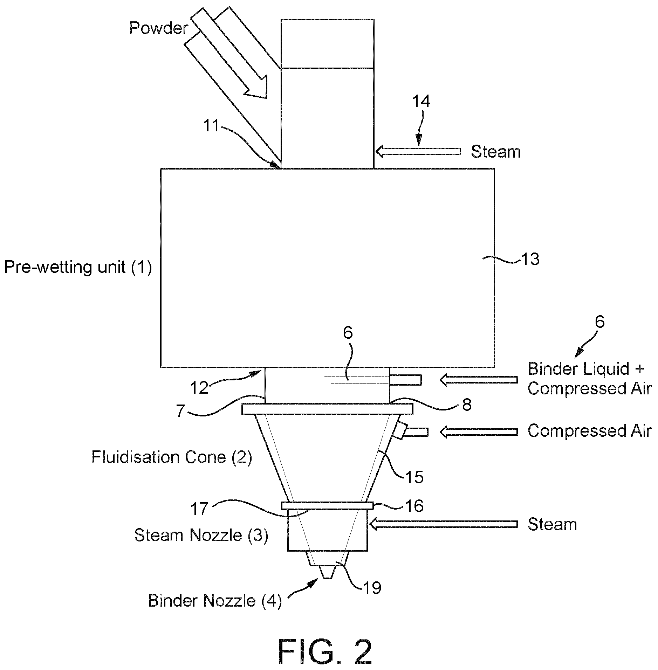

Figure 2 shows semantically the design and functionality of the agglomeration system according to the invention.

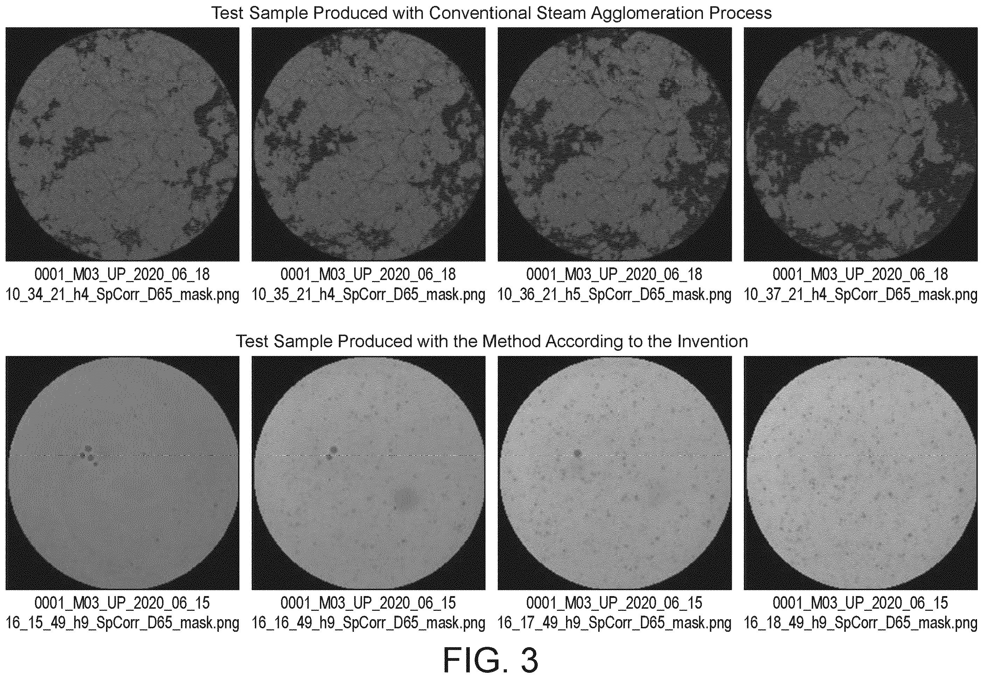

Figure 3 shows pictures from picture analysis, analyzing how much powder stays over time on the surface of beverages, The figure shows the difference between the samples 30, 60, 90 and 120 seconds after the preparation from a conventional method compared with samples prepared with the agglomeration system and method according to the invention.

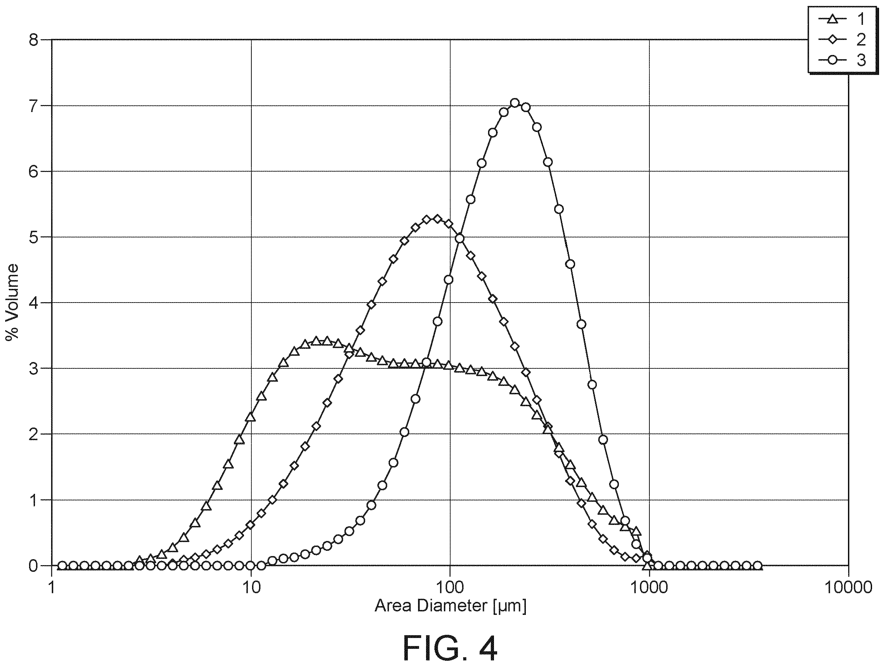

Figure 4 shows a chart comparing the particle size distribution of a cocoa beverage sample made according to the invention (curve 3) against a conventionally steam agglomerated sample (curve 2) and the powder before agglomeration (curve 1). Compared to the conventionally agglomerated product, the agglomeration system and method according to the invention reduces the quantity of small particles (< 90 µm) by more than 50 %.

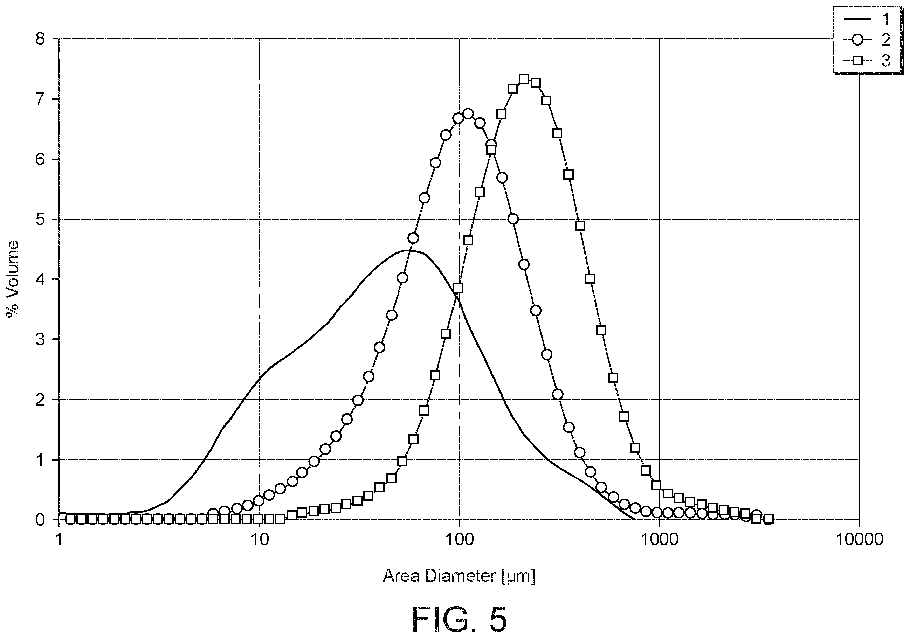

Figure 5 is a chart with the particle size distribution of the powder before agglomeration (curve 1) and the size enlargement and fines reduction effects of the present invention (curve 3 squares) compared to a standard steam process (curve 2 empty circles) for a plant protein beverage.

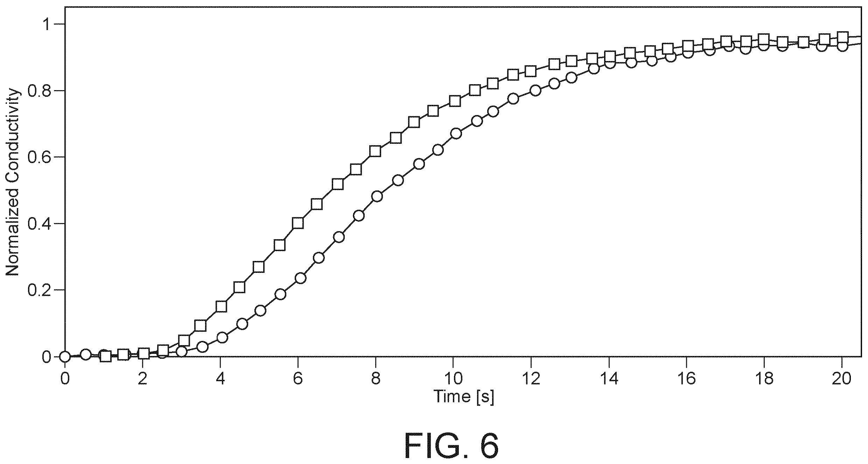

Figure 6 is a chart comparing the reconstitution performance of the agglomerated powder according to the present invention (squares) compared to agglomerated powder of a standard steam process (empty circles). The chart shows an improvement of reconstitution as measured by conductivity under stirring.

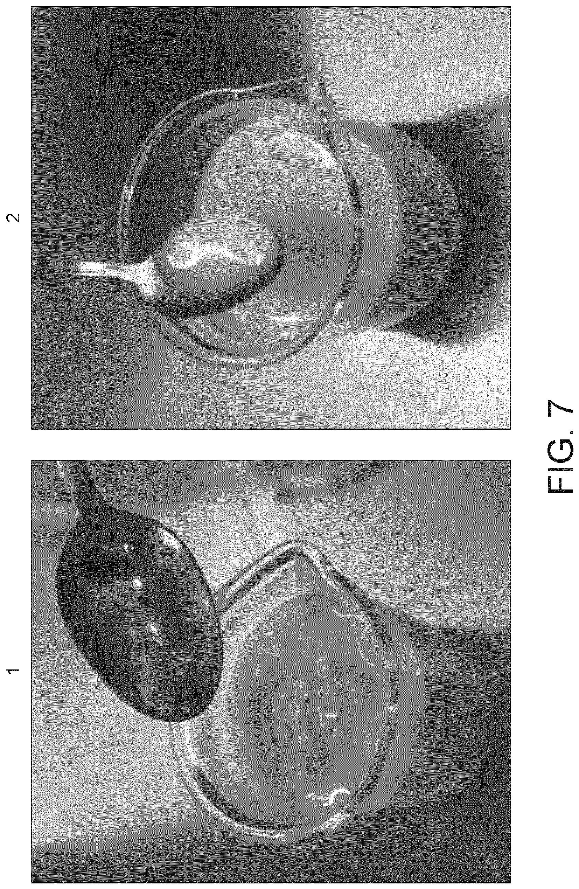

Figure 7 shows pictures of a beverage with the same composition, comparing the reconstitution performance of the agglomerated powder according to the present invention (2) or agglomerated with a standard steam process (1). The pictures show an improvement of reconstitution when observing the powder behavior.

### Detailed description of the invention

Consequently, the present invention relates an agglomeration system for continuously producing soluble agglomerated food powder comprising plant-based powder, said system comprises - an air-drying system, - a pre-wetting unit comprising a powder inlet and a powder outlet, and a continuous mixer, - a first steam nozzle for injecting steam into the continuous mixer, -a connection element connecting the powder outlet to an inlet, - a fluidization unit comprising the inlet and a outlet, conveying means. for receiving powder from the pre-wetting unit powder outlet via the connection element, - a second steam nozzle comprising a powder inlet for receiving the pre-wetted powder, a steam injection orifice arranged for spraying steam onto the pre-wetted powder at a powder outlet, and - a binder nozzle arranged below the second steam nozzle, and comprising a supply pipe adapted to spray liquid binder with compressed air into the powder at the powder outlet of the second steam nozzle, and injecting agglomerated powder from the outlet into the air-drying system.

According to the invention it has been found that the powder pre-wetting in a continuous mixer changes the particle surface properties, making the particles more sticky. It has further been found that the particles stick together and form pre-agglomerates. Further, according to the invention the binder liquid and steam are completing the wetting process at the outlet of the steam and binder liquid nozzle. Without wishing to be bound by theory, it is believed that the particle surfaces get liquid and form liquid bridges between the individual particles in the agglomerates. These bridges are dried in the air-drying system, preferably in a drying and agglomeration tower. The hardness of the agglomerates depends on the quantity of material in the inter-particle bridges. It has been found to be influenced by the type of binder material, its concentration in the liquid and the spraying quantity. Furthermore, according to the invention by heating up the powder and adding further moisture, steam additionally contributes to the agglomeration. It has been found that only the two-step process (pre-wetting before agglomeration) and the combination of steam and binder liquid in the main agglomeration step delivers a sufficiently strong agglomerated product. Advantageously, it has been found that such a product according to the invention has less than 25% of fine particles (< 90 µm) and low fragility.

Preferably, in the agglomeration system according to the invention the air-drying system (10) is a drying or agglomeration tower, a fluidized bed or a combination thereof.

In a particular preferred embodiment according to the invention the air-drying system is a drying or agglomeration tower. Advantageously, the drying and agglomeration tower is connected to a continuous fluidized bed for powder after-drying and/or cooling.

In a preferred embodiment of the invention the fluidization unit is a fluidization cone and the conveying means in the unit is a cone shaped hopper.

In a preferred embodiment of the agglomeration system according to the invention the drying and agglomeration tower is connected to a continuous fluidized bed for powder after-drying and/or cooling.

Advantageously, continuous mixer used in the agglomeration system according to the invention is a vertical continuous mixer.

Preferably in the agglomeration system according to the invention, the conveying means (15) in the fluidization unit (2) is a cone hopper, more preferably a cone hopper that reduces its cross section from an outlet of the continuous mixer (13) to the powder inlet (17) of the steam nozzle (3). This design provides a good flow of the power through the fluidization unit.

Advantageously, the fluidization unit (2) is jacketed and comprises a membrane to allow fluidization with compressed air. This reduces fouling effects.

In a preferred embodiment of the agglomeration system a liquid binder supply pipe is arranged at the outlet of pre-wetting unit for supplying binder liquid to the binder liquid nozzle at the outlet of second steam nozzle.

A milling unit for the ingredient mix may be arranged before the continuous mixer to ensure an appropriate particle size of the food powder.

It is preferred that the food powder is fluidized at pre-defined frequency to avoid fouling and blockages.

In the agglomeration system and method according to the invention, it is preferred that the continuous mixer is working at high speed, preferably at 1000 - 4000 rpm, more preferably at 2000 rpm.

According to the present invention it has been found that with an increased binder concentration (viscosity) better agglomeration is obtained. Even with sugar binder, non-amorphous ingredients that are conventionally very challenging to agglomerate (no measurable glass transition temperature, no viscous bridge) can be agglomerated. This requires good bulking agent wettability.

In the fluidization unit, the powder can be fluidized at pre-defined frequency to avoid fouling and blockages.

The method according to the invention comprises the steps of providing an agglomeration system as discussed above and food powder. In the method comprises pre-agglomerating the food powder by pre-wetting the food powder with steam in the continuous mixer, and providing a liquid binder, feeding the pre-wetted powder via the second steam nozzle into the air-drying system while spraying the liquid binder via the binder liquid nozzle onto the pre-wetted powder and injecting steam via the second steam nozzle into the pre-wetted powder in at the same time to form agglomerates of the pre-wetted powder, drying and cooling the soluble agglomerated food powder. The dried and cooled agglomerated powder may be packed and stored.

In the method according to the invention the agglomerated powder is preferably dried with hot air in the drying tower, and optionally further dried in a fluidized bed. Advantageously, the cooling takes place in a fluidized bed, preferably with dry cold air.

If the food powder comprises cocoa powder, the cooling is preferably to a temperature 40 - 48°C. For other plant-based powders such as plant-based powder comprising plant protein it is preferred that the cooling is to a temperature below 40°C.

When the food powder comprises dairy component a cooling to a temperature below 35°C is preferred.

In a preferred embodiment of the invention, the liquid binder comprises 20 to 75 wt. % dry matter, preferably from 30 to 60 wt. % dry matter.

Advantageously, the liquid binder comprises carbohydrates and/or protein. Preferably, the liquid binder is a solution in water of carbohydrates, the carbohydrates preferably being selected from the group consisting of sugars, polysaccharides or a combination thereof. In a preferred embodiment of the invention the liquid binder consists only of carbohydrate and/or protein, and water.

In the present context sugars may be fructose, glucose, maltose, sucrose, lactose, dextrose or a combination thereof. The polysaccharides may be maltodextrin, polydextrose, oligofructose, soluble fibers or other oligosaccharides or a combination thereof.

Sugar substitutes like e.g. sorbitol, mannitol, xylitol or combinations thereof, maltodextrins, dried glucose syrups, malt extracts, starches, trehalose, raftiline, raftilose, galactose, maltose, oligosaccharides, honey powders, and mixtures of same, and/or a non-carbohydrate based sweetener like e.g. Splenda^{®}, Acesulfame K^{®}, aspartame or Stevia^{®}, and mixtures of same, may be added to the liquid binder.

In a preferred embodiment of the invention the liquid binder is free from emulsifiers or "dissolution agent" such as emulsifiers. Examples of such emulsifiers are ethoxylated mono and di-glycerides, and propylene glycol. The present invention does not require special ingredients to constitute the liquid binder. The prior art recommends a high intensity agglomerator delivering dense particles, whereas the present invention delivers agglomerates with an open structure while being resistant to mechanical attrition. In the present invention the binder liquid has the unique function of binding together the particles in the agglomeration. These particles would otherwise not stick together. The excellent reconstitution properties are obtained as a result of the structure formed in the process. This make the invention particular useful for components that are not inherently soluble such as plant-based protein ingredients.

In an alternative embodiment, the liquid binder may be water only.

In a further alternative embodiment, the liquid binder is a fruit concentrate or juice.

The agglomerated powder obtained with the agglomeration system according to the invention may also be combined with sweeteners to form a product. The final product may comprise the agglomerated powder and - a carbohydrate base sweetener selected from the group consisting of : sugars such as fructose, glucose, maltose, sucrose, lactose, dextrose, high fructose corn syrup or sugar substitutes like e.g. sorbitol, mannitol, xylitol or combinations thereof, maltodextrins, dried glucose syrups, malt extracts, starches, trehalose, raftiline, raftilose, galactose, maltose, oligosaccharides, honey powders, and mixtures of same, and/or
- a non-carbohydrate based sweetener like e.g. Splenda^{®}, Acesulfame K^{®}, aspartame or Stevia^{®}, and mixtures of same.

In the method for producing agglomerated food powder according to the invention, the temperature of binder liquid preferably is 5 - 60 °C when sprayed on the pre-wetter powder. Above 60°C the powder may get too humid.

In order to obtain a good mouthfeel of the final product, it is preferred that the plant-based powder is milled to a mean particle size of 20 to 80 microns, preferably 30 to 60 microns before pre-wetting.

When running the method according to the invention, preferably the steam to pre-wet the product is 2 to 6 kg steam for 100 kg powder, preferably 3 to 4 kg steam.

Advantageously, in the method according to the invention for every 100 kg of wet powder going into the air-drying system are added 5 to 16 kg of binder. Below the 5 kg there is no advantage of the method according to the invention compared to conventional processes and above, the power gets too humid and this would lead to nozzle blockages and fouling in the air-drying system. The drying of the product would be difficult.

**To get a** good shelf life of the final agglomerated powder, the agglomerated powder is dried to below 0.3 water activity aw.

Preferably, the plant-based powder is selected from the group consisting of plant protein flours, concentrates or isolates. Plant-based powders may be selected from the group consisting of powder of soy, oat, canola, faba bean, chickpea, pea, cocoa, cereal or gain flours, oat flour, rice, wheat, millet, barley or a combination thereof. Optionally a further agglomeration, drying or cooling step can take place in a fluid bed supplied with a gas that is preferably air. The operating parameters of the fluid bed are set according to the knowledge of the man skilled in the art. The air temperature can be comprised between 60 and 150°C for the drying of the agglomerated food powder. The product temperature can be comprised between 25 and 65°C.

The invention also relates to the soluble agglomerated food powder obtained by the method such as described above.

The soluble agglomerated food powder according to the invention comprises a granulometry comprised between 100 and 1500 µm and quantity of fine particles of less than 25% volume based (< 90µm) with an optimum between 10-20% fines. The granulometry can be measured by laser diffraction, within dry dispersion in air stream.

The soluble agglomerated food powder according to the invention has a dissolution time in water at 40°C in less than 15 s with moderate stirring without lump formation.

In a wettability assessment, the soluble agglomerated food powder according to the invention has a wettability time in milk at 10°C of less than 45 s without stirring, without lump formation. Wettability being the time it takes for the powder to drown in the milk without stirring.

The term "food" shall be understood in accordance with Codex Alimentarius as any substance, whether processed, semi-processed or raw, which is intended for human consumption, and includes drink, chewing gum and any substance which has been used in the manufacture, preparation or treatment of "food" but does not include cosmetics or tobacco or substances used only as drugs.

The composition of the present invention may further be enriched with vitamins, for example vitamins A, C, D, B1, B2, B3, B6, B7, B9 and/or B12, and minerals, for example, Fe, Ca, Zn.

Although the invention has been described by way of example, it should be appreciated that variations and modifications may be made without departing from the scope of the invention as defined in the claims.

Figure 1 shows the agglomeration system according to the invention for agglomerated food powders including optional process units for e.g. mixing, milling, drying, cooling and sieving. The method according to the invention replaces the conventional steam agglomeration unit at the top of the tower.

### Agglomeration method according to the invention in two step process

Fig. 2 describes the system, which is installed on top of the agglomeration tower cover. It comprises a vertical continuous mixer which allows continuous mixing of steam into the base powder stream. The pre-wetted base powder is then passing into a cone, which simply reduces the cross section from the mixer outlet to the binder nozzle inlet. The cone is jacketed and the inside surface is a membrane, which allows regular fluidization with compressed air to reduce powder fouling effects. In between the mixer and the fluidization unit, a cylindrical adaptor is installed, which is equipped with the liquid binder and atomizing gas supply pipe. The supply pipe passes in a 90° angle to the outlet of the system and is equipped with an atomizing nozzle. Binder liquid is sprayed onto the powder from the center of the tube and at the same time steam is injected.

In a further embodiment, the invention relates to an agglomeration system for continuously producing soluble agglomerated food powder comprising plant-based powder, said system comprises - an air-drying system (10), - a pre-wetting unit (1) comprising a continuous mixer (13) and a first steam nozzle (14) for injecting steam into the continuous mixer (13), - a fluidization unit (2), - a second steam nozzle (3), and - a binder nozzle (4) adapted to spray liquid binder into the powder from second steam nozzle (3), and injecting agglomerated powder into the air-drying system (10). Preferably, the air the injection of agglomerated powder is into a drying and agglomeration tower.

### Examples

### Example 1

Agglomeration trials were performed using a sugar reduced cocoa beverage mix, containing 30% of cocoa and 68% of carbohydrates (see table below).

**Table 1**

| | %wt. |
|---|---|
| Cocoa (10/12% fat) | 30.1 |
| Sugar | 23.4 |
| Resistant dextrin | 22.4 |
| Cereal flour | 22.2 |
| Soya lecithin (60% soya oil) | 1.5 |
| Other ingredients (flavors, micronutrients) | 0.4 |
| Total | 100 |

The powdered raw materials were dry mixed with the liquid lecithin and then milled in a high impact mill (e.g. Hosokawa Ultraplex UPZ). The base powder particle size was analyzed using a Laser PSD analyzer with dry dispersion. The results shown in the table below.

**Table 2**

| | |
|---|---|
| D[4,3] | 91.8 |
| D10 | 8.4 |
| D50 | 47.6 |
| D90 | 247 |
| Mode | 89.9 |
| Span | 5.01 |
| < 90µm | 65 % |

### Malvern Powder Size Distribution (PSD) base powder properties

One part of the fine powder was then steam agglomerated using a conventional steam tower process. In this operation, 13.3 kg of steam was used for 100 kg of power. Then the second part of the base powder was agglomerated with the method according to the invention. The process included a pre-agglomeration with steam (4.7 kg of steam for 100 kg of powder), followed by a second agglomeration with simultaneous steam and binder liquid addition (10.6 kg of steam and 12.9 l of binder for 100 kg of powder). The binder liquid was made of oligofructose at 50% dry matter. Both agglomerated test products were dried to a similar final product moisture (water activity aw < 0.3).

The Particle Size Distribution (PSD) of both method samples were analyzed with the same Malver Laser method, used for the base powder analysis already. The PSD results (table 3) show a significant difference. The mean particle size of the sample from the method according to the invention is much larger, and the d50 was found to be more than twice as big and the quantity of fine particles (< 90 µm) is more than cut in half. This has the effect that the product according to the invention is significantly improved in its reconstitution properties in cold liquids and as well in its flowability properties, means in its behavior in dispensing machine.

**Table 3**

| Conventional method | | Method according to the invention | |
|---|---|---|---|
| D[4,3] | 190.28 | D[4,3] | 279.76 |
| D10 | 19.4 | D10 | 55.1 |
| D50 | **79.4** | D50 | **196.1** |
| D90 | 351.5 | D90 | 595.9 |
| Mode | 86.4 | Mode | 211 |
| < 90 µm | **53%** | < 90 µm | **20%** |

### Malvern PSD test sample properties.

Fig. 2 shows the agglomeration system according to the invention comprising a drying and agglomeration tower (10), and a pre-wetting unit (1). The pre-wetting unit comprises a powder inlet (11) and a powder outlet (12), a continuous mixer (13) and a first steam nozzle (14) for injecting steam into the continuous mixer (13). The agglomeration system also comprises a connection element (7) connecting the powder outlet (12) to a cone inlet (8), and a fluidization unit (2) comprising the cone inlet (8) and a cone outlet (16), a cone shaped hopper (15) for receiving powder from the pre-wetting unit powder outlet (12) via the connection element (7). Also comprised in the system according to the invention is a second steam nozzle (3) comprising a powder inlet (17) for receiving the pre-wetted powder, a steam injection orifice arranged for spraying steam onto the pre-wetted powder at a powder outlet (19). Furthermore, comprised in the agglomeration system according to the invention is a binder nozzle (4) arranged below the second steam nozzle (3), and comprising a supply pipe (6) adapted to spray liquid binder with compressed air into the powder at the powder outlet (19) of the second steam nozzle (3), and injecting agglomerated powder from outlet (19) into the drying and agglomeration tower (10).

The reconstitution properties were analyzed using picture analysis, analyzing how much powder stays over time on the surface of the beverages, which a robot had prepared with cold milk. The robot is using a well-defined protocol, which allows eliminating all preparation differences. Figure 3 shows the difference between the samples 30, 60, 90 and 120 seconds after the preparation. The sample from the method according to the invention shows a surface free of powder directly after preparation. The surface of the sample manufactured with the conventional process stays covered all over the 120 seconds. Only a slight change from dry to wet powder was observed in form of a bright to darker surface. With the high cocoa content and the high quantity of polysaccharides in the recipe, the solubility of the powder is insufficient, if only steam agglomerated. The food powder according to the invention shows better reconstitution and solubility than the powder prepared with the conventional process.

To analyze, if the samples also differentiate in their fragility, a transport test was performed and compared the quantity of fine particles (< 90 µm), which the transport generated additionally. After a pneumatic transport of 70 m with seven 90° bends and an air velocity of 5.5 m/s, it was found that there was a clear difference between the samples. For the conventionally produced sample, the fine particle quantity increased by 10% from 53 to 63%, whereas the sample from the method according to the invention only showed an increase of 3% from 20 to 23%. A clear difference in fragility was observed.

To analyze the optional sensorial impact of the system and method according to the invention, the samples were subjected to sensory evaluation. Both samples passed first through an internal panel and then an external expert panel evaluation. Both panels came to the conclusion that there are no major differences between both samples. There may be some slight sensory differences depending on the type of binder component added as an additional ingredient in the final recipe.

### Example 2

**Table 4 Plant based composition with plant-based protein**

| | %wt. |
|---|---|
| Polydextrose | 22.8 |
| Pea protein | 20.4 |
| Oat flour | 20.4 |
| Rice flour | 18.3 |
| Sugar | 12.2 |
| Other ingredients | 5.9 |

Powders were dry-mixed then milled before the agglomeration process. In one case the mix was agglomerated following the standard agglomeration with steam. In another case the mix was agglomerated with the method according to the invention, including a pre-agglomeration with steam, followed by a second agglomeration with simultaneous steam and binder liquid addition. Other ingredients comprise flavor, minerals, vitamins etc.

It was observed that the size enlargement and fines reduction effects of the present invention were significantly higher than for the standard steam process (Figure 5). As a consequence, the reconstitution performance was also significantly improved when observing the powder behavior and as measured by conductivity under stirring (Figure 6).

**Table 5**

| | Average size D [4,3] (µm) | %Fines < 91 µm |
|---|---|---|
| Conventional process (steam) | 132 | 48.0 |
| Process according to the invention | 258 | 13.8 |

## Claims

1. Agglomeration system for continuously producing soluble agglomerated food powder comprising plant-based powder, said system comprises
- an air-drying system (10),
- a pre-wetting unit (1) comprising
a powder inlet (11) and a powder outlet (12),
a continuous mixer (13) and
a first steam nozzle (14) for injecting steam into the continuous mixer (13),
- a connection element (7) connecting the powder outlet (12) to an inlet (8),
- a fluidization unit (2) comprising
the inlet (8) and an outlet (16), and
conveying means (15) for receiving powder from the pre-wetting unit powder outlet (12) via the connection element (7),
- a second steam nozzle (3) comprising
a powder inlet (17) for receiving the pre-wetted powder,
a steam injection orifice arranged for spraying steam onto the pre-wetted powder at a powder outlet (19), and
- a binder nozzle (4) arranged below the second steam nozzle (3), and comprising a supply pipe (6) adapted to spray liquid binder with compressed air into the powder at the powder outlet (19) of the second steam nozzle (3) and injecting agglomerated powder from outlet (19) into the air-drying system (10) .

2. Agglomeration system according to claim 1, wherein the air-drying system (10) is a drying or agglomeration tower, a fluidized bed or a combination thereof.

3. Agglomeration system according to claim 2, wherein the air-drying system (10) is a drying or agglomeration tower which is connected to a continuous fluidized bed (21) for powder after-drying and/or cooling.

4. Agglomeration system according to any of the preceding claims, wherein the fluidization unit is a fluidization cone and the conveying means (15) is a cone shaped hopper.

5. Agglomeration system according to any of the preceding claims, wherein the continuous mixer (13) is a vertical continuous mixer.

6. An agglomeration system according to claim 4, wherein the cone hopper (15) in the fluidization cone (2) reduces its cross section from an outlet of the continuous mixer (13) to the powder inlet (17) of the steam nozzle (3).

7. Agglomeration system according to any of the preceding claims, wherein the fluidization unit (2) is jacketed and comprises a membrane to allow fluidization with compressed air.

8. Agglomeration system according to any of the preceding claims, wherein the liquid binder supply pipe (6) is arranged at the outlet (12) of pre-wetting unit (1) for supplying binder liquid to the binder liquid nozzle (4) at the outlet of second steam nozzle (3).

9. Agglomeration system according to any of the preceding claims, wherein a milling unit (23) for the ingredient mix is arranged before the continuous mixer.

10. A method for continuously producing a soluble agglomerated food powder comprising plant-based powder, said method comprises the steps of -providing an agglomeration system according to claims 1 to 9,
- providing food powder,
- pre-agglomerating the food powder by pre-wetting the food powder with steam in the continuous mixer (13),
- providing a liquid binder,
- feeding the pre-wetted powder via the second steam nozzle (3) into the air-drying system while spraying the liquid binder via the binder liquid nozzle (4) onto the pre-wetted powder and injecting steam via the second steam nozzle (3) into the pre-wetted powder in at the same time to form agglomerates of the pre-wetted powder,
- drying and cooling the soluble agglomerated food powder.

11. A method for producing agglomerated food powder according to claim 10, wherein the agglomerated powder is dried with hot air in the air-drying system, and optionally further dried in the fluidized bed (21).

12. A method for producing agglomerated food powder according to claims 10 to 11, wherein the cooling takes place in the fluidized bed (21), preferably with dry cold air.

## Patentansprüche

1. Agglomerationssystem zum kontinuierlichen Herstellen von löslichem, agglomeriertem Lebensmittelpulver, umfassend pflanzenbasiertes Pulver, wobei das System umfasst
- ein Lufttrocknungssystem (10),
- eine Vorbenetzungseinheit (1), umfassend
einen Pulvereinlass (11) und einen Pulverauslass (12),
einen Durchlaufmischer (13) und
eine erste Dampfdüse (14) zum Einspritzen von Dampf in den Durchlaufmischer (13),
- ein Verbindungselement (7), das den Pulverauslass (12) mit einem Einlass (8) verbindet,
- eine Fluidisierungseinheit (2), umfassend
den Einlass (8) und einen Auslass (16), und
Fördermittel (15) zum Aufnehmen von Pulver aus dem Pulverauslass (12) der Vorbenetzungseinheit über das Verbindungselement (7),
- eine zweite Dampfdüse (3), umfassend
einen Pulvereinlass (17) zum Aufnehmen des vorbenetzten Pulvers,
eine Dampfeinspritzöffnung, die zum Sprühen von Dampf auf das vorbenetzte Pulver an einem Pulverauslass (19) angeordnet ist, und
- eine Bindemitteldüse (4), die unterhalb der zweiten Dampfdüse (3) angeordnet ist und umfassend eine Zuleitung (6), die geeignet ist, um flüssiges Bindemittel mit Druckluft in das Pulver an dem Pulverauslass (19) der zweiten Dampfdüse (3) zu sprühen und agglomeriertes Pulver von dem Auslass (19) in das Lufttrocknungssystem (10) einzuspritzen.

2. Agglomerationssystem nach Anspruch 1, wobei das Lufttrocknungssystem (10) ein Trocknungs- oder Agglomerationsturm, eine Wirbelschicht oder eine Kombination davon ist.

3. Agglomerationssystem nach Anspruch 2, wobei das Lufttrocknungssystem (10) ein Trocknungs- oder Agglomerationsturm ist, der zum Pulvernachtrocknen und/oder -kühlen mit einer kontinuierlichen Wirbelschicht (21) verbunden ist.

4. Agglomerationssystem nach einem der vorstehenden Ansprüche, wobei die Fluidisierungseinheit ein Fluidisierungskegel ist und das Fördermittel (15) ein kegelförmiger Trichter ist.

5. Agglomerationssystem nach einem der vorstehenden Ansprüche, wobei der Durchlaufmischer (13) ein vertikaler Durchlaufmischer ist.

6. Agglomerationssystem nach Anspruch 4, wobei der Kegeltrichter (15) in dem Fluidisierungskegel (2) seinen Querschnitt von einem Auslass des Durchlaufmischers (13) zu dem Pulvereinlass (17) der Dampfdüse (3) reduziert.

7. Agglomerationssystem nach einem der vorstehenden Ansprüche, wobei die Fluidisierungseinheit (2) ummantelt ist und eine Membran umfasst, um eine Fluidisierung mit Druckluft zu ermöglichen.

8. Agglomerationssystem nach einem der vorstehenden Ansprüche, wobei die Zuleitung (6) für flüssiges Bindemittel an dem Auslass (12) der Vorbenetzungseinheit (1) zum Zuleiten von Bindemittelflüssigkeit an die Bindemittelflüssigkeitsdüse (4) an dem Auslass der zweiten Dampfdüse (3) angeordnet ist.

9. Agglomerationssystem nach einem der vorstehenden Ansprüche, wobei vor dem Durchlaufmischer eine Mahleinheit (23) für die Zutatenmischung angeordnet ist.

10. Verfahren zum kontinuierlichen Herstellen eines löslichen, agglomerierten Lebensmittelpulvers, umfassend pflanzenbasiertes Pulver, das Verfahren umfassend die Schritte
- Bereitstellen eines Agglomerationssystem nach den Ansprüchen 1 bis 9,
- Bereitstellen von Lebensmittelpulver,
- Voragglomerieren des Lebensmittelpulvers durch Vorbenetzen des Lebensmittelpulvers mit Dampf in dem Durchlaufmischer (13),
- Bereitstellen eines flüssigen Bindemittels,
- Zuführen des vorbenetzten Pulvers über die zweite Dampfdüse (3) in das Lufttrocknungssystem unter gleichzeitigem Sprühen des flüssigen Bindemittels über die Bindemittelflüssigkeitsdüse (4) auf das vorbenetzte Pulver und Einspritzen von Dampf über die zweite Dampfdüse (3) in das vorbenetzte Pulver, um Agglomerate des vorbenetzten Pulvers auszubilden,
- Trocknen und Kühlen des löslichen, agglomerierten Lebensmittelpulvers.

11. Verfahren zum Herstellen von agglomeriertem Lebensmittelpulver nach Anspruch 10, wobei das agglomerierte Pulver mit Heißluft in dem Lufttrocknungssystem getrocknet und optional in der Wirbelschicht (21) weiter getrocknet wird.

12. Verfahren zum Herstellen von agglomeriertem Lebensmittelpulver nach den Ansprüchen 10 bis 11, wobei das Kühlen in der Wirbelschicht (21) vorzugsweise mit trockener Kaltluft erfolgt.

## Revendications

1. Système d'agglomération pour la production en continu d'une poudre alimentaire agglomérée soluble comprenant une poudre à base de plantes, ledit système comprend
- un système de séchage à l'air (10),
- une unité de préhumidification (1) comprenant
une entrée de poudre (11) et une sortie de poudre (12),
un mélangeur continu (13) et
une première buse à vapeur d'eau (14) permettant d'injecter de la vapeur d'eau dans le mélangeur continu (13),
- un élément de liaison (7) permettant de relier la sortie de poudre (12) à une entrée (8),
- une unité de fluidification (2) comprenant
l'entrée (8) et une sortie (16), et
un moyen de transport (15) permettant de recevoir de la poudre provenant de la sortie de poudre d'unité de préhumidification (12) par l'intermédiaire de l'élément de liaison (7),
- une seconde buse à vapeur d'eau (3) comprenant
une entrée de poudre (17) permettant de recevoir la poudre préhumidifiée,
un orifice d'injection de vapeur d'eau conçu pour pulvériser de la vapeur d'eau sur la poudre préhumidifiée au niveau d'une sortie de poudre (19), et
- une buse à liant (4) disposée sous la seconde buse à vapeur d'eau (3), et comprenant un tuyau d'alimentation (6) adapté pour pulvériser du liant liquide avec de l'air comprimé dans la poudre au niveau de la sortie de poudre (19) de la seconde buse à vapeur d'eau (3) et pour injecter de la poudre agglomérée à partir de la sortie (19) dans le système de séchage à l'air (10).

2. Système d'agglomération selon la revendication 1, dans lequel le système de séchage à l'air (10) est une tour de séchage ou d'agglomération, un lit fluidisé ou une combinaison de ceux-ci.

3. Système d'agglomération selon la revendication 2, dans lequel le système de séchage à l'air (10) est une tour de séchage ou d'agglomération qui est reliée à un lit fluidisé (21) continu pour le post-séchage et/ou le refroidissement de la poudre.

4. Système d'agglomération selon l'une quelconque des revendications précédentes, dans lequel l'unité de fluidisation est un cône de fluidisation et le moyen de transport (15) est une trémie en forme de cône.

5. Système d'agglomération selon l'une quelconque des revendications précédentes, dans lequel le mélangeur continu (13) est un mélangeur continu vertical.

6. Système d'agglomération selon la revendication 4, dans lequel la trémie conique (15) dans le cône de fluidisation (2) réduit sa section transversale d'une sortie du mélangeur continu (13) à l'entrée de poudre (17) de la buse à vapeur d'eau (3).

7. Système d'agglomération selon l'une quelconque des revendications précédentes, dans lequel l'unité de fluidisation (2) est gainée et comprend une membrane pour permettre une fluidisation avec de l'air comprimé.

8. Système d'agglomération selon l'une quelconque des revendications précédentes, dans lequel le tuyau d'alimentation en liant liquide (6) est disposé au niveau de la sortie (12) de l'unité de préhumidification (1) pour l'alimentation en liant liquide de la buse à liant liquide (4) au niveau de la sortie de la seconde buse à vapeur d'eau (3).

9. Système d'agglomération selon l'une quelconque des revendications précédentes, dans lequel une unité de broyage (23) pour le mélange d'ingrédients est disposée avant le mélangeur continu.

10. Procédé pour la production en continu d'une poudre alimentaire agglomérée soluble comprenant une poudre à base de plantes, ledit procédé comprend les étapes consistant à
- fournir un système d'agglomération selon les revendications 1 à 9,
- fournir de la poudre alimentaire,
- préagglomérer la poudre alimentaire par préhumidification de la poudre alimentaire avec de la vapeur d'eau dans le mélangeur continu (13),
- fournir un liant liquide,
- introduire la poudre préhumidifiée dans le système de séchage à l'air par le biais de la seconde buse à vapeur d'eau (3) tout en pulvérisant le liant liquide par le biais de la buse à liant liquide (4) sur la poudre préhumidifiée et injecter de la vapeur d'eau par le biais de la seconde buse à vapeur d'eau (3) dans la poudre préhumidifiée en même temps afin de former des agglomérats de la poudre préhumidifiée,
- sécher et refroidir la poudre alimentaire agglomérée soluble.

11. Procédé pour la production de poudre alimentaire agglomérée selon la revendication 10, dans lequel la poudre agglomérée est séchée à l'air chaud dans le système de séchage à l'air, et facultativement en outre séchée dans le lit fluidisé (21).

12. Procédé pour la production de poudre alimentaire agglomérée selon les revendications 10 à 11, dans lequel le refroidissement a lieu dans le lit fluidisé (21), de préférence avec de l'air froid sec.
